# EUROPÄISCHE PATENTSCHRIFT

(11) **EP 2 576 898 B1**
(45) Veröffentlichungstag und Bekanntmachung des Hinweises auf die Patenterteilung: **25.02.2015**
(21) Anmeldenummer: 11721320.7
(22) Anmeldetag: 25.05.2011
(51) Int. Cl.: D21F 1/08, F16K 31/04, F16K 37/00

(54) **VERFAHREN ZUR ZUSTANDSKONTROLLE VON GESCHLOSSENEN VENTILSYSTEMEN ZUR BEURTEILUNG DES WARTUNGSZUSTANDES**
METHODE FOR CONTROLLING THE STATE OF CLOSED VALVES FOR MAINTENANCE ASSESSMENT
PROCÉDURE DE CONTRÔLE DE L'ÉTAT DE SYSTÈMES DE VALVES FERMÉES POUR L'ÉVALUATION DES ETATS DE MAINTENANCE

(30) Priorität: 01.06.2010 DE 102010029601
(43) Veröffentlichungstag der Anmeldung: 10.04.2013
(73) Patentinhaber: Voith Patent GmbH, 89522 Heidenheim (DE)
(72) Erfinder: BIENER, Peter, 89542 Herbrechtingen (DE)
(86) Internationale Anmeldenummer: PCT/EP2011/058531
(87) Internationale Veröffentlichungsnummer: WO 2011/151233

(56) Entgegenhaltungen:
- EP-A1- 1 477 873
- DE-A1- 19 522 488
- US-A- 5 800 678
- US-A- 6 155 283
- US-A1- 2002 109 115

## Beschreibung

Die Erfindung betrifft ein Verfahren zur Funktionsüberwachung von angetriebenen Ventilen, insbesondere zur Überwachung von Verdünnungswasserventilen, wie sie in Faserstoffbahnherstellungsmaschinen eingesetzt werden.

Es ist bekannt, dass Faserbahnherstellungsmaschinen einen Stoffauflauf aufweisen, der über eine Vielzahl von Leitungen aus einem Verteiler mit Stoffsuspension versorgt wird, wobei die einzelnen Volumenströme durch einstellbare Ventile geregelt werden.

Weiterhin ist bekannt, dass zur Regelung des Flächengewichtes eine weitere sektionale Stoffzuführung in den Stoffauflauf erfolgt. Eine derartige Mischeinrichtung ist Beispielsweise aus der Patentanmeldung DE 40 19 593 bekannt. Hier wird eine Mischeinrichtung vorgestellt, die dazu dient, mehrere Teilvolumenströme derart zu mischen, dass ein konstanter Gemischvolumenstrom entsteht. Hierzu werden Teilvolumenströme in Mischer geführt und durch Anwendung einer aufwendigen Ventilsteuerung in Abhängigkeit voneinander geregelt.

Ziel ist es, das Flächengewicht der Faserstoffbahn derart zu regeln, dass das Flächengewicht in Querrichtung (CD) möglichst konstant ist. Dies geschieht mit Hilfe einer Vielzahl von nebeneinander angeordneten Ventilen, einem sogenannten Array.

Alle Ventile verfügen über einen Aktuator oder Positionsantrieb, durch den die Zugabe von Verdünnungswasser geregelt wird.

Das Problem besteht nun darin, dass die Ventile über der Zeit verspinnen, verstopfen und/oder sich nur noch schwer bewegen lassen. Dies hat zur Folge, dass sich der Durchfluss verändert und/oder der Regelvorgang behindert wird.

Um vorbeugende Maßnahmen der Wartung zu erfüllen, müssen heutzutage die Ventile in regelmäßigen Abständen zerlegt werden, um deren Zustand zu überprüfen.

Dies ist, durch die große Anzahl der Ventile, eine sehr aufwendige Prozedur, eine CD Profilierungseinrichtung besteht aus bis zu 200 Ventileinheiten.

In der US 2002/10 91 15 A1 wird hierzu ein Verfahren zur Funktionsüberwachung von Ventilen beschrieben, bei dem der Antrieb des Ventils mittels Schrittantrieb erfolgt. Für eine Zustandsbestimmung des Ventils über eine Schrittzählung gibt es hierbei allerdings keine Anregung.

Bei der US 61 55 283 A wird zuvor die Reibung im Ventil ermittelt, jedoch ohne Bezug zum Prozess.

Darüber hinaus offenbaren die EP 14 77 873 A1, die US 58 00 678 A sowie die DE 195 22 488 A1 motorisch angetriebene Ventile.

Aufgabe der Erfindung ist es, ein Verfahren bereitzustellen, mit dem die Funktionsüberwachung von angetriebenen Ventilen reproduzierbar und automatisiert durchgeführt und beurteilt werden kann.

Diese Aufgabe wird mit dem Verfahren zur Funktionsüberwachung von motorisch angetriebenen Ventilen zur Regelung von Flüssigkeitsströmen, der eingangs genannten Art erfindungsgemäß dadurch gelöst, dass der Antrieb des Ventils mittels eines Schrittantriebs erfolgt und die durch eine Fehlfunktion des Ventils hervorgerufene fehlerhafte Schrittzählung dazu verwendet wird, einen Reibindex für das Ventil zu ermitteln.

Wie bereits beschrieben, kommt es vor, dass die Ventile über der Zeit verspinnen, verstopfen und/oder sich nur noch schwer bewegen lassen. Dies hat zur Folge, dass sich der Durchfluss verändert und/oder der Regelvorgang behindert wird. Alle Störungen verändern die Reibung beim Verstellen des Ventils, sodass der Antrieb mehr Kraft benötigt, das Ventil zu verstellen. Durch den Einsatz eines Schrittantriebes kommt es dadurch zu einer fehlerhaften Schrittzählung. Die von der Steuerung des Schrittantriebes vorgegebenen und gezählten Schritte werden nicht alle ausgeführt. Um einen erhöhten Reibwiderstand zu überwinden, muss der Schrittmotor zusätzliche Schrittbefehle erhalten, um die Friktion des Antriebes auszugleichen.

Die zusätzlichen benötigten Schritte führen zu einer fehlerhaften Schrittzählung, bezogen auf die, für den Verfahrweg tatsächlich benötigten Schritte. Die Fehlschritte sind eine Maß für die Reibung im Ventil, aus denen ein Reibindex für das Ventil ermittelt werden kann.

Zur Beurteilung des Ventilzustandes, kann das Ventil von einem Flüssigkeitsstrom durchflossen werden, während der Schrittantrieb von einer ersten Endlage in eine zweite Endlage verfahren wird und dabei die erforderlichen Schritte der Antriebsbewegung gezählt werden.

Es ist aber auch denkbar, die Beurteilung des Ventilzustandes durchzuführen, wenn sich das Ventil im Leerlauf befindet, also nicht von einem Flüssigkeitsstrom durchflossen wird.

Beim ersten Einschalten des Schrittantriebes sollten vorzugsweise die erforderlichen Schritte oder Vollschritte ermittelt werden, die für den maximalen vorhandenen Verfahrweg notwendig sind. Die Ermittlung des Verfahrweges von der ersten Endlage zur zweiten Endlage des Schrittantriebs findet mit maximalem Drehmoment und kleinster Geschwindigkeit statt, damit sichergestellt ist, dass kein Schritt durch Friktion oder Überschwingen verloren geht.

Eine weitere Verbesserung des Verfahrens zur Ermittlung des Reibindexes des Schrittantriebs kann dadurch erreicht werden, indem mit unterschiedlichen Geschwindigkeiten von der ersten Endlage zur zweiten Endlage gefahren wird und dabei die benötigten Schritte gezählt werden.

Des Weitern kann der Schrittantrieb mit unterschiedlichen Stromstärken von der ersten Endlage zur zweiten Endlage verfahren werden, wobei die Stromstärke vorzugsweise zwischen 0,05A und 1A liegt und in 16 Schritten geändert wird.

In beiden Fällen erhält man eine Reihe von Messwerten, aus denen der Reibindex bzw. der Zustand des Ventils bestimmt werden kann. Auch eine Kombination der beiden Verfahren ist denkbar.

Weiterhin kann der, mittels des Verfahrens, ermittelte Reibindex zur Korrektur des Verfahrweges zwischen der ersten und zweiten Endlage verwendet und damit zur Korrektur der Ventilstellung verwendet werden.

Gemäß einer alternativen Ausgestaltung des erfindungsgemäßen Verfahrens, kann der ermittelte Reibindex zur Berechnung der optimalen Beschleunigungsrampe, Verfahrgeschwindigkeit und Abbremsrampe entsprechend dem Ventilzustand verwendet werden, sodass es nicht zu einem Schrittimpulsfehler kommt.

Hier wird der Effekt berücksichtigt, dass der Haftreibungswiderstand in der Regel wesentlich größer ist, als der Gleitwiderstand und eine überschwingen bei langsamer Fahrt wesentlich unwahrscheinlicher ist.

Der Schrittantrieb erfolgt vorzugsweise mittels eines Schrittmotors bzw. Synchronmotors, kann aber auch mittels eines Linearmotors erfolgen.

Nachfolgend wird die Erfindung anhand von Skizzen näher erläutert und ein Ausführungsbeispiel dargestellt. Die Figuren zeigen beispielhaft:
- **Figur 1**: eine schematische Übersicht von einer CD Regeleinrichtung ein
- **Figur 2**: Positionsantrieb
- **Figur 3**: Diagramm

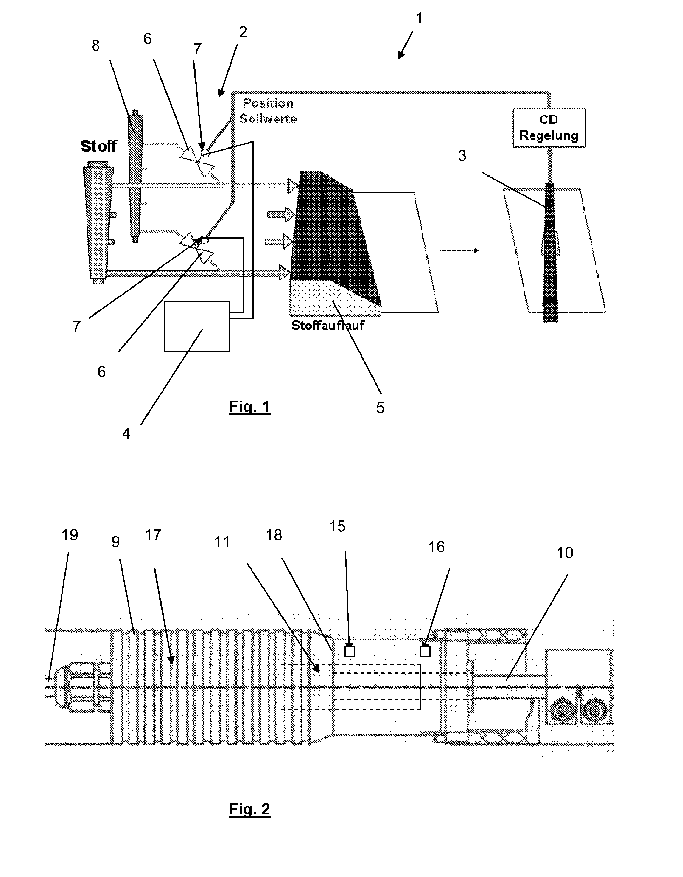

In der Figur 1 ist eine schematische Übersicht einer CD Regeleinrichtung 1 dargestellt. Die CD Regeleinrichtung 1 besteht aus einer CD Profilierungseinrichtung 2, einer CD Regelung sowie einem Messrahmen 3, mit dem das Flächengewichts- und Feuchtequerprofil gemessen wird. Wobei die CD Profilierungseinrichtung 2 aus bis zu 200 Ventileinheiten besteht, mit denen das Flächengewicht, in Querrichtung (CD), durch Zugabe von Verdünnungswasser 8 geregelt wird. Jede Ventileinheit besteht aus einem Ventil 6 welches von einem Positionierantrieb 7 angesteuert wird.

In Figur 2 ist ein Positionierantrieb 7 mit Anschluss an das Ventil 6 gezeigt, mit dem das erfindungsgemäße Verfahren durchgeführt werden kann. Im Positionierantriebsgehäuse 9 ist eine Schubstange 10, die aus dem Positionierantriebgehäuse 9 herausragt und in diesem axial verschiebbar gelagert ist, ein Spindelantrieb 11 zur axialen Verschiebung des Schubgestänges 10, ein Schrittmotor 17 sowie ein erster 15 und zweiter Endschalter 16, zur Begrenzung der Bewegung der Schubstange 10, untergebracht.

Die Schubstange 10 ist mit dem Ventil 6 verbunden und erlaubt es, das Ventil 6 zu öffnen und zu schließen.

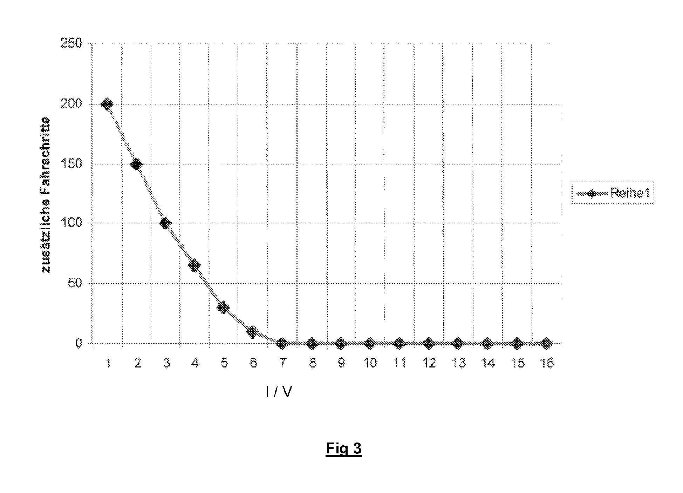

Figur 3 zeigt ein Diagramm der Reibwertkurve, aus der der Reibindex ermittelt wird. Bauartenbedingt ist der Schubstangenweg der Schubstange 10 begrenzt und von der Länge her bekannt. Bei der ersten Inbetriebnahme sollte er aber gemessen werden, indem der vorhandenen Verfahrwegs bzw. die erforderlichen Schritte zum Verfahren der Schubstange 10 von der ersten Endlage 15 zur zweiten Endlage 16 durch den Schrittantrieb 17, mit maximalem Drehmoment und kleinster Geschwindigkeit, ermittelt wird.

Um nun Festzustellen, ob die Funktion des Ventils 6 und/oder des Positionsantriebes 7 gewährleistet ist, erfolgt eine Ansteuerung des Schrittmotors 17 mit einer bestimmten Stromstärke zwischen 0,05A und 1A und der Schrittmotor 17 wird schrittweise solange von der ersten Endlage 15 aus verfahren, bis die zweite Endlage 16 erreicht wird. Die dazu benötigten Schritte werden mitgezählt.

Wird nun, beim Verfahren mit niedriger Stromstärke, der Endschalter 16 nicht oder außerhalb der Toleranz der bekannten Schrittanzahl erreicht, ist dies ein Indiz für eine zu hohe Friktion.

Die gezählten zusätzlichen Fahrschritte, die notwendig sind, um die andere Endlage des Verfahrweges zu erreichen, werden im Diagramm über dem vorgewählten Strom (Drehmoment) aufgetragen. Daraus kann ein Reibindex bestimmt werden und mit einer "Gut / Schlecht" Bewertung versehen werden.

Diese Messungen können auch in Kombination mit der Geschwindigkeit des Verfahrens erfolgen, was eine beliebige Feinheit des Messergebnisses liefern könnte.

Bei einem turnusmäßigen Einsatz des Verfahrens, könnten so am Wartungstag die Trends der Ventile bewertet werden und vorsorglich in kurzer Zeit überprüft, repariert und ausgetauscht werden.

Das Diagramme zeigt sehr gut den Zusammenhang zwischen Reibung als Funktion vom eingestellten Strom (Drehmoment), der notwendig ist, um den gesamten Verfahrweg zu überstreichen.

Ein verfahren der Schubstange erfolgt unter dem Gesichtspunkt, dass jeder Schrittimpuls exakt ausgeführt wird und nicht durch ein zu geringes Drehmoment blockiert oder durch Überschwingen beeinflusst wird. Dafür wird für das Anfahren und Abbremsen eine sehr flache Beschleunigungsrampe errechnet.

Diese Berechnung erfolgt unter Berücksichtigung der Parameter wie max. Geschwindigkeit und Zielwert der gewünschten Position.

Um die Dynamik des Antriebes zu erhalten, wird die Berechnung online vor jeder Fahrt ausgeführt.

Bei jeder Möglichkeit, sofern dies der Prozess zulässt, erfolgt eine Referenzierung. Mit einer Plausibiliserung der Schritte zwischen der aktuellen Position bis zum Referenzpunkt kann das Berechnungsmodell adaptiv angepasst werden, sowie die Qualität der Reibwertmessung beurteilt werden.

Der Motor ist so bemessen, dass sein Haltemoment (auch Schleichfahrt) die maximale vorkommende Kraft bewältigt ohne einen Winkelschritt zu verlieren

Die Standzeit des Positionsantriebs wird zudem erhöhen, da die notwendige Steuerelektronik nicht mehr in dem Antriebsgehäuse eingebaut ist, sondern in einer abgesetzten Elektronikbox, die bis zu 8 Positionsantriebe steuern und in einem entsprechend geschützten Schrank eingebaut sein kann. Die Entfernung zwischen Steuerelektronik und Positionsantrieb kann bis zu 15m betragen.

### Bezugszeichenliste

- 1: CD Regeleinrichtung
- 2: CD Profilierungseinrichtung
- 3: Messrahmen
- 4: Steuereinheit
- 5: Stoffauflauf
- 6: Ventil
- 7: Positionsantrieb
- 8: Verdünnungswasser
- 9: Antriebsgehäuse
- 10: Schubstange
- 11: Spindelantrieb
- 12: Antriebsmotor
- 13: Steuerelektronik
- 14: Encoder
- 15: erster Endschalter
- 16: zweiter Endschalter
- 17: Schrittmotor
- 18: Gehäuseverbindung
- 19: Anschlusskabel

## Patentansprüche

1. Verfahren zur Funktionsüberwachung von motorisch angetriebenen Ventilen (6) zur Regelung von Flüssigkeitsströmen, insbesondere zur Überwachung von Verdünnungswasserventilen, wie sie in Faserstoffbahnherstellungsmaschinen eingesetzt werden, wobei der Antrieb (7) des Ventils (6) mittels eines Schrittantriebs (17) erfolgt, **dadurch gekennzeichnet, dass** die durch eine Fehlfunktion des Ventils (6) hervorgerufene fehlerhafte Schrittzählung dazu verwendet wird, einen Reibindex für das Ventil (6) zu ermitteln.

2. Verfahren nach Anspruch 1
**dadurch gekennzeichnet,**
**dass** das Ventil (6) von einem Flüssigkeitsstrom durchflossen wird, während der Schrittantrieb (17) von einer ersten Endlage (15) in eine zweite Endlage (16) verfahren wird und dabei die erforderlichen Schritte der Antriebsbewegung gezählt werden.

3. Verfahren nach Anspruch 1
**dadurch gekennzeichnet,**
**dass** das Ventil (6) im Leerlauf von dem Schrittantrieb von einer ersten Endlage (15) in eine zweite Endlage (16) verfahren wird und dabei die erforderlichen Schritte der Antriebsbewegung gezählt werden.

4. Verfahren nach einem der vorhergehenden Ansprüche
**dadurch gekennzeichnet,**
**dass** zur Ermittlung des vorhandenen Verfahrwegs bzw. der erforderlichen Schritte zum Verfahren von der ersten Endlage zur zweiten Endlage der Schrittantrieb mit maximalem Drehmoment und kleinster Geschwindigkeit verfahren wird.

5. Verfahren nach einem der vorhergehenden Ansprüche
**dadurch gekennzeichnet,**
**dass** zur Ermittlung des Reibindexes der Schrittantrieb mit unterschiedlichen Geschwindigkeiten von der ersten Endlage zur zweiten Endlage verfahren wird und dabei die benötigten Schritte gezählt werden.

6. Verfahren nach einem der vorhergehenden Ansprüche
**dadurch gekennzeichnet,**
**dass** zur Ermittlung des Reibindexes der Schrittantrieb mit unterschiedlichen Stromstärken von der ersten Endlage zur zweiten Endlage verfahren wird und dabei die benötigten Schritte gezählt werden.

7. Verfahren nach Anspruch 6
**dadurch gekennzeichnet,**
**dass** die Stromstärke zwischen 0,05A und 1A liegt und vorzugsweise in 16 Schritten gestuft verändert wird.

8. Verfahren nach Anspruch 5 oder 6
**dadurch gekennzeichnet,**
**dass** aus den bei den Messfahrten ermittelten Schrittfehlern der Reibindex ermittelt wird, der zur Beurteilung Ventilzustandes verwendet wird.

9. Verfahren nach Anspruch 5 oder 6
**dadurch gekennzeichnet,**
**dass** der ermittelte Reibindex zur Korrektur des Verfahrweges zwischen der ersten und zweiten Endlage verwendet und damit zur Korrektur der Ventilstellung verwendet wird.

10. Verfahren nach Anspruch 5 oder 6
**dadurch gekennzeichnet,**
**dass** der ermittelte Reibindex zur Berechnung der optimalen Beschleunigungsrampe, Verfahrgeschwindigkeit und Abbremsrampe entsprechend dem Ventilzustand verwendet wird, sodass es nicht zu einem Schrittimpulsfehler kommt.

11. Verfahren nach einem der vorhergehenden Ansprüche
**dadurch gekennzeichnet,**
**dass** der Schrittantrieb (17) mittels eines Schrittmotors bzw. Synchronmotors erfolgt.

12. Verfahren nach einem der vorhergehenden Ansprüche
**dadurch gekennzeichnet,**
**dass** der Schrittantrieb (17) mittels eines Linearmotors erfolgt.

## Claims

1. Method for the functional monitoring of motordriven valves (6) for controlling liquid flows, in particular for monitoring dilution water valves, such as are used in fibrous web production machines, wherein the drive (7) of the valve (6) is carried out by means of a stepping drive (17),
**characterized in that**
the erroneous step count caused by a malfunction of the valve (6) is used to determine a frictional index for the valve (6).

2. Method according to Claim 1,
**characterized in that**
a liquid flow flows through the valve (6) while the stepping drive (17) is moved from a first end position (15) to a second end position (16) and, in the process, the necessary steps of the drive movement are counted.

3. Method according to Claim 1,
**characterized in that**
the valve (6) is moved by the stepping drive from a first end position (15) to a second end position (16) while idling and, in the process, the necessary steps of the drive movement are counted.

4. Method according to one of the preceding claims,
**characterized in that**
in order to determine the existing movement travel and the required steps for moving from the first end position to the second end position of the stepping drive, movement is carried out with maximum torque and at minimum speed.

5. Method according to one of the preceding claims,
**characterized in that**
in order to determine the frictional index of the stepping drive, a movement from the first end position to the second end position is carried out with different speeds and, in the process, the necessary steps are counted.

6. Method according to one of the preceding claims,
**characterized in that**
in order to determine the frictional index of the stepping drive, a movement from the first end position to the second end position is carried out with different current intensities and, in the process, the necessary steps are counted.

7. Method according to Claim 6,
**characterized in that**
the current intensity lies between 0.05 A and 1 A and is changed in stages, preferably in 16 steps.

8. Method according to Claim 5 or 6,
**characterized in that**
the step errors determined during the measuring travels are used to determine the frictional index, which is used to assess the valve condition.

9. Method according to Claim 5 or 6,
**characterized in that**
the frictional index determined is used to correct the movement travel between the first and second end position and is therefore used to correct the valve position.

10. Method according to Claim 5 or 6,
**characterized in that**
the frictional index determined is used to calculate the optimal acceleration ramp, speed of travel and braking ramp in accordance with the valve condition, so that a step impulse error does not occur.

11. Method according to one of the preceding claims,
**characterized in that**
the stepping drive (17) is provided by means of a stepping motor or synchronous motor.

12. Method according to one of the preceding claims,
**characterized in that**
the stepping drive (17) is provided by means of a linear motor.

## Revendications

1. Procédé de contrôle du fonctionnement de soupapes (6) entraînées par un moteur pour la régulation de flux de liquide, en particulier de contrôle de soupapes d'eau de dilution tel qu'elles sont utilisées dans des machines de fabrication de bandes fibreuses, l'entraînement (7) de la soupape (6) s'effectuant au moyen d'un entraînement pas à pas (17), **caractérisé en ce que** le comptage des pas défectueux provoqué par une fonction défectueuse de la soupape (6) est utilisé pour déterminer un indice de friction pour la soupape (6).

2. Procédé selon la revendication 1, **caractérisé en ce que** la soupape (6) est parcourue par un flux de liquide tandis que l'entraînement pas à pas (17) est déplacé d'une première position de fin de course (15) dans une deuxième position de fin de course (16) et les pas nécessaires pour le déplacement d'entraînement sont en l'occurrence comptés.

3. Procédé selon la revendication 1, **caractérisé en ce que** la soupape (6), pendant la marche à vide, est déplacée par l'entraînement pas à pas d'une première position de fin de course (15) dans une deuxième position de fin de course (16) et les pas nécessaires pour le déplacement d'entraînement sont en l'occurrence comptés.

4. Procédé selon l'une quelconque des revendications précédentes, **caractérisé en ce que** pour la détermination de la course de déplacement existante ou des pas nécessaires pour le déplacement de la première position de fin de course à la deuxième position de fin de course, l'entraînement pas à pas est déplacé avec un couple maximal et une vitesse minimale.

5. Procédé selon l'une quelconque des revendications précédentes, **caractérisé en ce que** pour la détermination de l'indice de friction, l'entraînement pas à pas est déplacé avec des vitesses différentes de la première position de fin de course à la deuxième position de fin de course et les pas nécessaires sont en l'occurrence comptés.

6. Procédé selon l'une quelconque des revendications précédentes, **caractérisé en ce que** pour la détermination de l'indice de friction, l'entraînement pas à pas est déplacé avec différentes intensités de courant de la première position de fin de course à la deuxième position de fin de course et les pas nécessaires sont en l'occurrence comptés.

7. Procédé selon la revendication 6, **caractérisé en ce que** l'intensité du courant est comprise entre 0,05 A et 1 A et est modifiée de préférence de manière étagée en 16 pas.

8. Procédé selon la revendication 5 ou 6, **caractérisé en ce que** l'on détermine, à partir des erreurs de pas déterminées lors des déplacements de mesure, l'indice de friction qui est utilisé pour évaluer l'état de la soupape.

9. Procédé selon la revendication 5 ou 6, **caractérisé en ce que** l'indice de friction déterminé est utilisé pour corriger la course de déplacement entre la première et la deuxième position de fin de course et ainsi pour corriger la position de la soupape.

10. Procédé selon la revendication 5 ou 6, **caractérisé en ce que** l'indice de friction déterminé est utilisé pour calculer la rampe d'accélération optimale, la vitesse de déplacement optimale et la rampe de freinage optimale en fonction de l'état de la soupape, de sorte qu'il ne se produise pas d'erreur d'impulsion de pas.

11. Procédé selon l'une quelconque des revendications précédentes, **caractérisé en ce que** l'entraînement pas à pas (17) s'effectue par un moteur pas à pas ou par un moteur synchrone.

12. Procédé selon l'une quelconque des revendications précédentes, **caractérisé en ce que** l'entraînement pas à pas (17) s'effectue au moyen d'un moteur linéaire.
